# EUROPÄISCHE PATENTSCHRIFT

(11) **EP 0 774 841 B1**
(45) Veröffentlichungstag und Bekanntmachung des Hinweises auf die Patenterteilung: **21.05.2003**
(21) Anmeldenummer: 96116293.0
(22) Anmeldetag: 11.10.1996
(51) Int. Cl.: H04B 1/16, H04B 1/10

(54) **Schaltanordnung für mobile Rundfunkempfänger**
Circuit for a mobile braodcast receiver
Circuit d'un récepteur de radiodiffusion mobile

(30) Priorität: 16.11.1995 DE 19542737
(43) Veröffentlichungstag der Anmeldung: 21.05.1997
(73) Patentinhaber: Bayerische Motoren Werke Aktiengesellschaft, 80788 München (DE)
(72) Erfinder: Schneider, Steffen, 80935 München (DE)

(56) Entgegenhaltungen:
- DE-A- 4 014 394
- US-A- 4 087 641
- US-A- 5 369 470

## Beschreibung

Es ist bei dieser Schaltanordnung bekannt, bei Auftreten eines Multipath-Effekts sofort von Stereo- auf Mono-Wiedergabe umzuschalten. Unter Multipath-Effekt ist das zeitverzögerte Eintreffen mehrerer identischer Sendesignale beim Empfänger zu verstehen. Unterschiedliche Laufzeiten der Sendesignale ergeben sich aufgrund von Reflexionen und Abschattungen des Sendesignals auf dem Weg zwischen Sender und Empfänger. Bei Multipath-Erscheinungen kommt es i.d.R. zu einer deutlichen Beeinträchtigung der Wiedergabequalität. Um dies zu vermeiden, wird auf Mono-Wiedergabe umgeschaltet und die Hörbarkeit akustischer Störungen damit verringert.

Mono- statt Stereo-Wiedergabe führt i.d.R. zu einer Beeinträchtigung des Wiedergabekomforts. Häufiges Umschalten zwischen Mono und Stereo führt zum Auftreten eines "Pump"-Effekts, der die Wiedergabequalität deutlich beeinflußt. Andererseits ist es notwendig, bei Auftreten von Multipath unmittelbar von Stereo auf Mono umzuschalten. Ein gleitendes und relativ langsames Zurückschalten auf Stereo bei Wegfall einer Multipath-Erscheinung beeinträchtigt die Wiedergabequalität besonders dann, wenn Multipath relativ selten und kurz auftritt. Typischerweise ist dies in Randbezirken von Großstädten der Fall, da dort relativ starke lokale Sender und selten wirksame Reflektoren für das Sendesignal vorhanden sind. Häufig tritt Multipath jedoch in Gebirgsnähe auf, da dort massive Reflektoren bei gleichzeitig verminderter Empfangsleistung bestehen.

Es ist aus der US-A-4 087 641 bekannt, bei einer Verringerung der Empfangssignalstärke schnell auf Mono-Wiedergabe und bei dann wieder ausreichender Empfangssignalstärke zeitverzögert umzuschalten. Muitipath-Erscheinungen werden dabei nicht berücksichtigt.

Zur Vermeidung einer versehentlichen Umschaltung von Mono- auf Stereobetrieb dann, wenn ein Störsignal schaltungstechnisch mit einem Stereo-Pilotsignal verwechselt werden würde, ist es aus der DE 40 14 394 A1 bekannt, die Umschaltung auf Stereobetrieb nur dann vorzunehmen, wenn das Pilotsignal hinreichend lange vorliegt. Der Erfindung liegt die Aufgabe zugrunde, eine Schaltanordnung der eingangs genannten Art zu schaffen, bei der der Einfluß von Multipath-Effekten auf die Wiedergabequalität gegenüber der bekannten Schaltanordnung deutlich reduziert ist.

Die Erfindung löst diese Aufgabe durch die kennzeichnenden Merkmale des Patentanspruchs 1.

Wesentlich ist die Häufigkeit, Stärke und/oder Länge von Multipath-Störungen. Treten diese sporadisch und kurz auf z.B. weniger als 1 mal pro sec und/oder weniger als 100 msec lang, so soll am Ende der Störung mit möglichst kleiner Rückstellzeit wieder von Mono- auf Stereo-Wiedergabe umgeschaltet werden. Eine typische Rückstellzeit beträgt kleiner gleich 50 msec Multipathstörungen sind dann kaum noch wahrnehmbar ebenso wie das Umschalten von Stereo auf Mono und wiederum zurück auf Stereo.

Bei häufigen, starken und längeren Multipathstörungen z.B. mehr als 1 mal pro sec und/oder länger als 100 msec wird bei Wegfall der Multipathstörung mit einer deutlich größeren Rückstellzeit (z.B. 1,5 sec) auf Stereo umgeschaltet Der Vorteil davon ist, daß bei erneutem Auftreten einer Multipathstörung lediglich der Mono-Wiedergabeanteil vergrößert werden muß, während der Stereo-Wiedergabeanteil ohnehin wesentlich geringer als der Mono-Wiedergabeanteil ist Ein ständiges, negativ bemerkbares Umschalten von Stereo- auf Mono-Wiedergabe und zurück auf Stereo tritt kaum in Erscheinung.

Bei geringer Häufigkeit ist die Rückstellzeit von Mono auf Stereo minimal, bei großer Häufigkeit hingegen maximal, beispielsweise 1,5 sec Es ist möglich, nur zwischen beiden Rückstellzeiten in Abhängigkeit von der Häufigkeit, Stärke und Länge der Monopathstörungen auszuwählen. Demgegenüber ist es für die Verbesserung der Wiedergabequalität von Vorteil, die Rückstellzeit in Abhängigkeit von der Häufigkeit variabel zu gestalten. Bei Monopathstörungen z.B. unter 1 Hz ist die Wiedergabezeit minimal, wie angegeben beispielsweise kleiner als 50 msec Bei z.B. 2 Hz gleich 100 msec, bei z.B. 3 Hz 500 msec, bei z.B. 4 Hz 1000 msec und einer Frequenz größer gleich 5 Hz maximal gleich 1,5 sec.

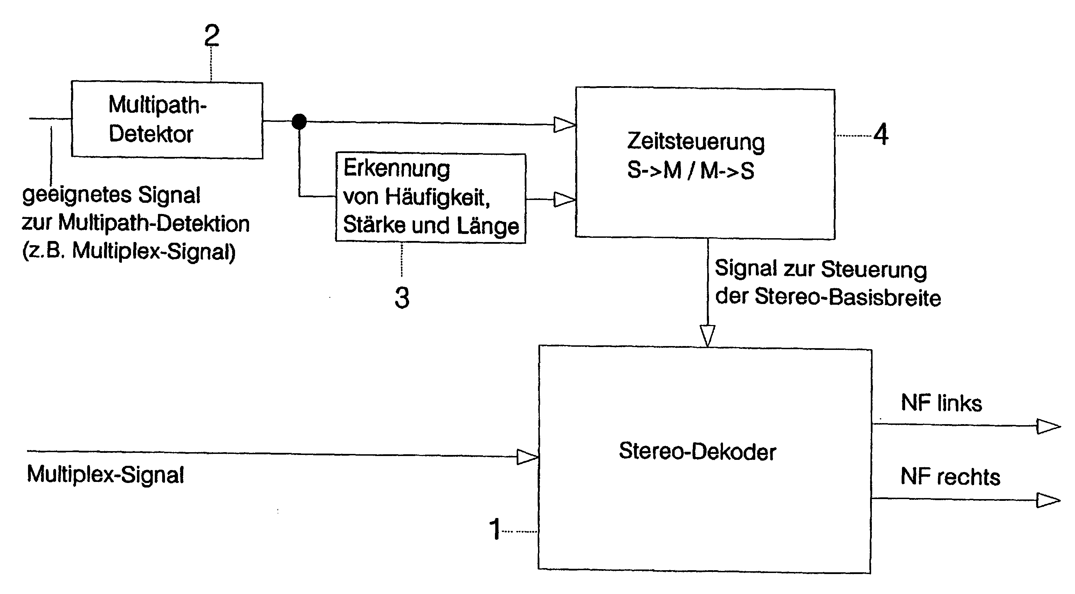

Anhand der Zeichnung ist die Erfindung weiter erläutert.

Die einzige Figur zeigt schematisch den prinzipiellen Aufbau eines mobilen Rundfunkempfängers zum Einsatz beispielsweise in einem Kraftfahrzeug. Das Multiplex-Empfangssignal gelangt in einen Stereodecoder 1 und wird dort als ein NF-Signal für den linken und rechten Wiedergabekanal ausgegeben. Das Empfangssignal ist ferner über einen Multipath-Detektor 2 geführt, der das Auftreten von Multipath-Störungen detektiert. Beispiele hierfür gehen aus der EP 0 132 752 B und der US 4,390,749 hervor.

Dem Detektor 2 ist eine Schaltung 3 nachgeordnet, mit der Häufigkeit, Stärke und/oder Länge von Multipath-Störungen erkannt werden. Das Ausgangssignal der Schaltung 3 und des Detektors 2 gelangt in eine Aufbereitungsschaltung 4, mit der ein Signal zur Steuerung der Stereo-Basisbreite gebildet wird. Mit Hilfe der Aufbereitungsschaltung 4 wird der Wiedergabeanteil des Stereo-Empfangs im Verhältnis zu dem des Mono-Empfangs bestimmt. Ein Empfang von häufig, stark und lang multipathgestörten Signalen wird eine lange Mono-Stereo-Rückstellzeit von z.B. 1,5 sec. eingestellt. Die Wiedergabequalität erscheint trotz der damit bedingten längeren Mono-Phasen in Anbetracht des ohnehin gestörten Empfangssignals akzeptabel. Treten nur selten Multipath-Störungen auf, wird eine kurze Rückstellzeit von Mono- auf Stereo-Wiedergabe eingesetzt. Die dann nur vereinzelt auftretenden kurzzeitigen Wechsel auf Mono sind kaum wahrnehmbar. Dadurch ergibt sich eine deutliche Verbesserung der Wiedergabequalität, da nur in dem Umfang auf Mono-Wiedergabe umgeschaltet werden muß, wie dies aufgrund der auftretenden Multipath-Störungen unumgänglich ist.

## Patentansprüche

1. Schaltanordnung für mobile Rundfunkempfänger mit einer Einrichtung zum Einstellen des Stereo-Wiedergabeanteils relativ zu Mono-Wiedergabeanteil in Abhängigkeit von Multipath-Effekten, **dadurch gekennzeichnet, dass** die Zeitdauer für die bei Wegfall der Multipathstörung erfolgende Rückstellung von Mono- auf Stereowiedergabe abhängig von der relativen Häufigkeit und/oder Stärke und/oder Länge von Multipath-Effekten ist.

2. Schaltanordnung nach Anspruch 1, **dadurch gekennzeichnet, daß** die Rückstellzeit bei geringer Häufigkeit und/oder Stärke und/oder Länge minimal ist.

3. Schaltanordnung nach Anspruch 1 oder 2, **dadurch gekennzeichnet, daß** die Rückstellzeit bei großer Häufigkeit und/oder Stärke und/oder Länge maximal ist.

4. Schaltanordnung nach Anspruch 2 oder 3, **dadurch gekennzeichnet, daß** die Rückstellzeit abhängig von der Häufigkeit und/oder Stärke und/oder Länge variabel ist.

## Claims

1. A circuit arrangement for mobile broadcast receivers with a device for setting the stereo reproduction component in relation to the mono reproduction component depending on multipath effects, **characterised in that** the duration of the switch back from mono to stereo reproduction when the multipath interference effect disappears is dependent on the relative frequency and/or intensity and/or length of the multipath effects.

2. A circuit arrangement according to claim 1, **characterised in that** the reset time is minimal when the frequency and/or intensity of the multipath effects is low and/or their duration is short.

3. A circuit arrangement according to claim 1 or 2, **characterised in that** the reset time is at a maximum when the frequency and/or intensity of the multipath effects is high and/or their duration is long.

4. A circuit arrangement according to claim 2 or 3, **characterised in that** the reset time is variable depending on the frequency and/or intensity and/or length of the multipath effects.

## Revendications

1. Circuit pour récepteur radio mobile comportant une installation pour régler la partie de réception stéréo par rapport à la partie de réception mono en fonction des effets de chemin multiple,
**caractérisé en ce que**
la durée pour laquelle en cas de disparition de la perturbation par effet de chemin multiple on revient du mode mono au mode stéréo dépend de la fréquence relative et/ou de l'intensité et/ou de la durée des effets de chemin multiple.

2. Circuit selon la revendication 1,
**caractérisé en ce que**
le temps de retour est minimum pour une fréquence et/ou une intensité et/ou une durée plus faibles.

3. Circuit selon l'une quelconque des revendications 1 ou 2,
**caractérisé en ce que**
le temps de retour est maximum pour une fréquence importante et/ou une intensité importante et/ou une durée importante.

4. Circuit selon l'une quelconque des revendications 2 ou 3,
**caractérisé en ce que**
le temps de retour est variable en fonction de la fréquence et/ou de l'intensité et/ou de la durée.
